# EUROPEAN PATENT SPECIFICATION

(11) **EP 1 252 047 B1**
(45) Date of publication and mention of the grant of the patent: **11.01.2006**
(21) Application number: 00978394.5
(22) Date of filing: 06.11.2000
(51) Int. Cl.: B60R 21/20

(54) **STEERING WHEEL WITH AIRBAG MODULE**
LENKRAD MIT AIRBAGMODUL
VOLANT DE DIRECTION POURVU D'UN MODULE AIRBAG

(30) Priority: 04.02.2000 US 498158
(43) Date of publication of application: 30.10.2002
(73) Proprietor: KEY SAFETY SYSTEMS, INC., Sterling Heights, Michigan 48314 (US)
(72) Inventor: FORD, Brian, Mt. Clemens, MI 48043 (US)
(74) Representative: Gislon, Gabriele
(86) International application number: PCT/US2000/030549
(87) International publication number: WO 2001/056841

(56) References cited:
- EP-A- 0 741 063
- EP-A- 0 754 602
- EP-A- 0 771 696
- US-A- 5 380 037
- "SNAP-IN INFLATABLE RESTRAINT MODULE MOUNTING SYSTEM FOR STEERING WHEELS" RESEARCH DISCLOSURE,GB,INDUSTRIAL OPPORTUNITIES LTD. HAVANT, no. 403, 1 November 1997 (1997-11-01), page 825 XP000726737 ISSN: 0374-4353

## Description

The present invention relates to a steering wheel with an airbag module.

Driver's side airbag modules typically have a cover for enclosing a cushion, or cushion pack assembly, and inflator. Typically, the cushion, inflator and cover are mounted to the housing, the housing having a number of fasteners to attach the airbag module to a vehicle's steering wheel.

EP 0741063 concerns an airbag module provided with mounting members both to securely trap an airbag, an inflator flange within an airbag retainer and to mount the module on a vehicle. Mounting members comprise a plurality of axially elongated first mounting members, each including a threaded shank portion adapted to engage a second mounting member, airbag module components being tightened between first and second mounting members. Second mounting member enables snap-fit attachment to a vehicle steering wheel hub.

The research disclosure "Snap-in inflatable restraint module mounting system for steering wheels", GB, industrial opportunities LTD. Havant, no. 403, (1997 - 11-01), page 825, ISSN : 0374-4353 forms the closest prior art according to the preamble of claim 1.

There is provided in accordance with the present invention a steering wheel with a driver's airbag module with mounting hardware that uses a steering wheel armature to secure the module and allows proper distribution of reaction forces. A wire fastening system is used to secure the module to the steering wheel.

### Brief Description of the Drawings

Fig. 1 is an exploded view of a driver's airbag module according to the present invention.
Fig. 1a shows a cushion and retaining ring.
Figs. 2a and 2b are top and bottom isometric views, respectively, of a subassembly of the present invention.
Fig. 3 shows a cushion pack and inflator subassembly installed in an airbag cover.
Fig. 4 shows a subassembly of the airbag module.
Fig. 5a is a bottom plan view of a driver's airbag module of the present invention in the locked position, snapped into attachment legs of a steering wheel armature.
Fig. 5b shows the driver's airbag module of with the attachment legs in the disassembly position.
Fig. 6 is a rear view of the cover of the airbag module of the present invention.
Fig. 7 is a plan view of the cover of the airbag module of the present invention.
Fig. 8 is an isometric view of a snap-end attachment nut employed in the present invention.
Fig. 9 shows a retaining ring employed in the present invention.
Fig. 10 is an enlarged view of the attachment legs employed in the present invention.
Fig. 11 is a plan view of a steering wheel employed in the present invention.
Fig. 12 is a plan view of the rear of the hub portion of the steering wheel.

### Detailed Description of the Invention

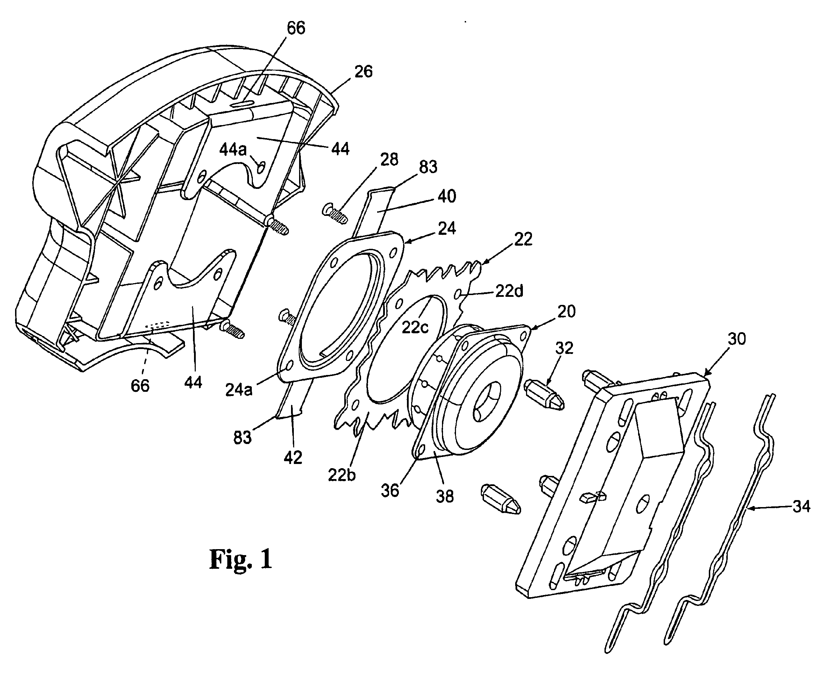

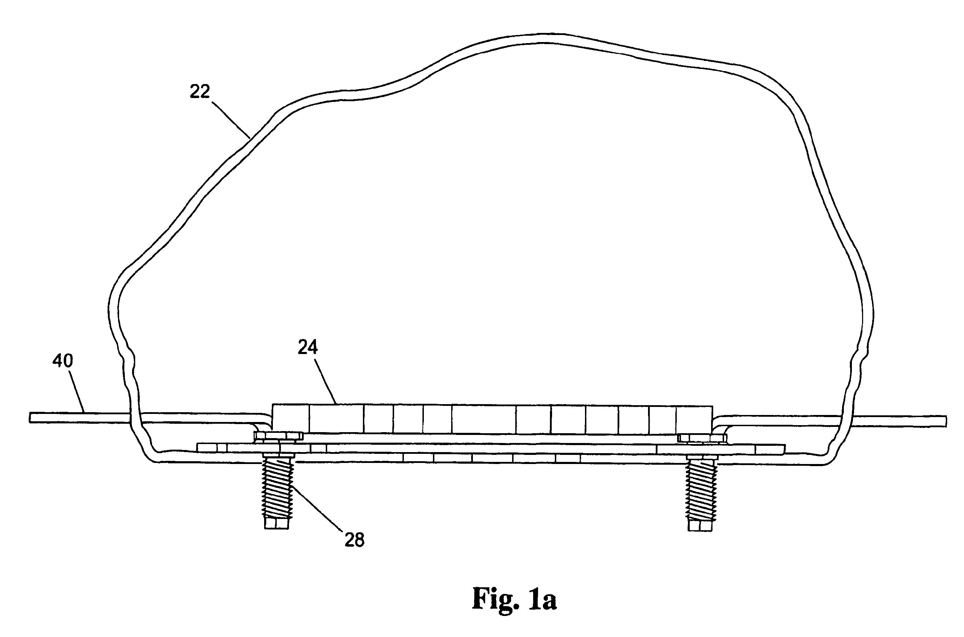

In Fig. 1 is an exploded view of a steering wheel with an airbag module of the present invention that comprises: an inflator 20; a cushion 22; a retaining ring 24; a cover 26; a plurality of threaded studs 28; a steering wheel armature 30 (only the hub is shown in Fig. 1); a plurality of snap-end attachment nuts 32; and a pair of retaining or attachment fasteners or clips 34.

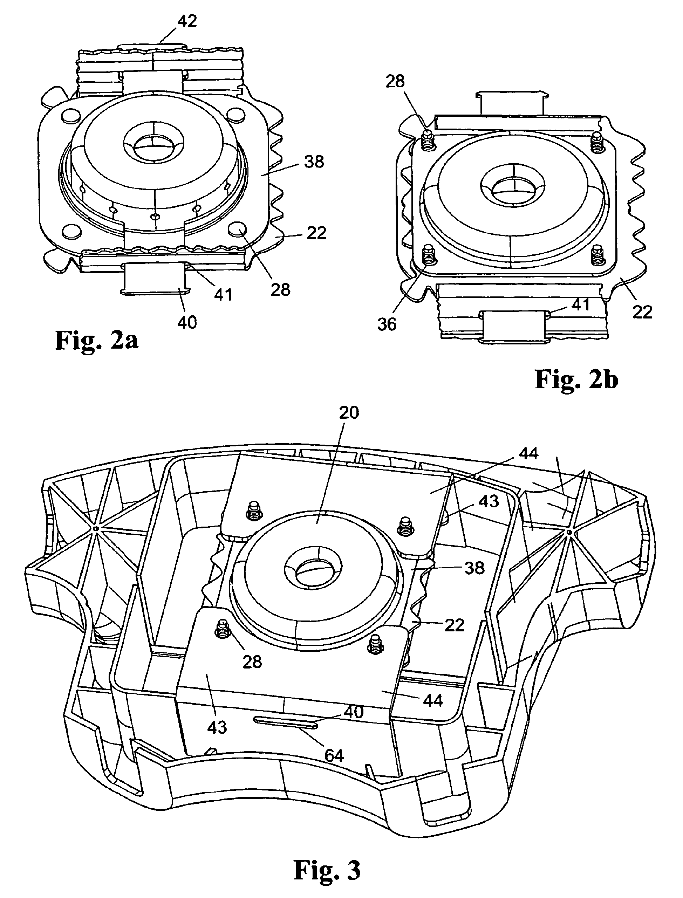

The airbag module is assembled by first placing the retaining ring 24 in the cushion 22. The retaining ring has a pair of tabs 40, 42 that are inserted through corresponding slots in the cushion as best shown in Fig. 1a. The retaining ring 24 has a plurality of holes 24a therein. The cushion 22 includes an inflatable portion 22a, an opening 22c and a plurality of holes 22d that are aligned with the holes 24b in the retaining ring. A threaded stud 28 is passed through a respective pair of holes 22d, 24b in the retaining ring and cushion. The threaded studs 28 are then passed through corresponding holes 36 in the inflator flange 38 as shown in Figs. 2a and 2b.

The cushion 22 is then folded and an optional layer of TYVEK® or other tearable material can be wrapped around the cushion after it is folded to prevent contaminants from entering the bag pack. A cushion assembly comprising the folded cushion 22, the retaining ring 24 and inflator 20 is placed in the cover 26 as shown in Fig. 3. As can be seen from the various figures, the underside of the cover 26 includes a peripheral wall 58 on its underside, which defines a cavity 59 into which the folded cushion ASSEMBLY is received. An L shaped flap 44 extends from each of two opposing sides 43 of the wall. Each flap has a plurality of holes 44a therethrough. The base of each flap 44 or the top of the adjacent side 43 has a slot 64, 66 therein. As shown, the flaps are integral to the cover 26. The flaps can be formed integrally with the cover or can be an insert-molded substrate. During assembly, as the cushion assembly is placed within the cover cavity, the retainer tabs 40, 42 are each received within a corresponding slot 64, 66. Each flap 44 is manipulated and folded over the inflator 20 so that a threaded stud 28 extends through each of the openings 44a in the tabs. The threaded studs 28 keep both the cushion 22 and cover 26 in place. The ends of the tabs 40, 42 are equipped with barbs 83 that prevent the flaps 44 of the cover 26 from sliding over the end of the tabs after the module is assembled. The extending ends of the tabs are easily grasped, manually or automatically, and provide the assembly plant, or assembler, with an easy means for transporting the module. The tabs 40, 42 improve fit and finish with the steering wheel armature 30 by improving the stability of the cover.

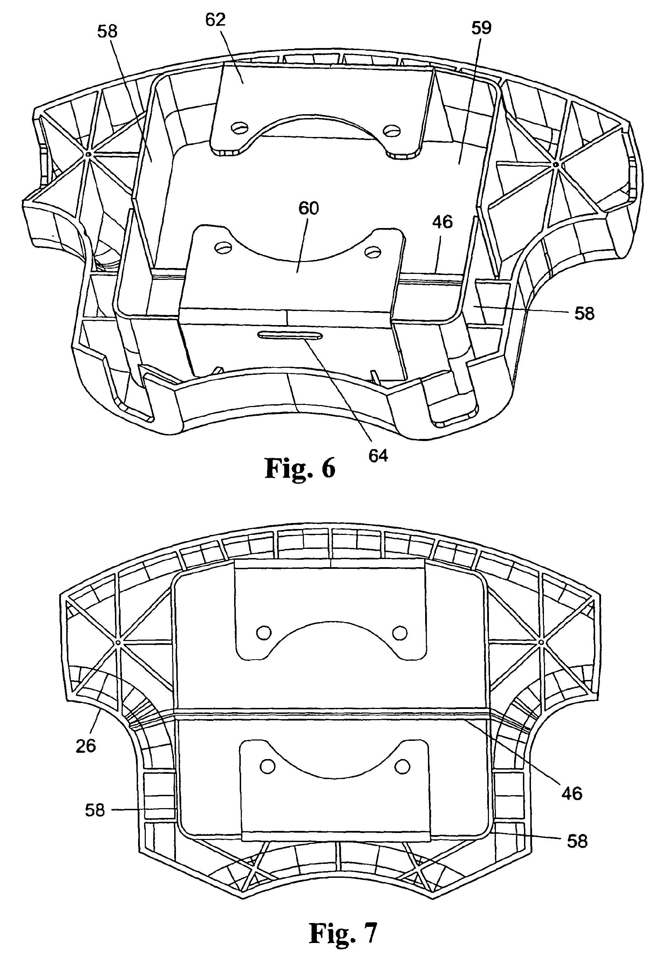

During the deployment of the cushion, the threaded studs 28 prevent movement of the cover 26 relative to the steering wheel armature 30. As best seen in Figs. 6 and 7, a tear seam 46 is placed through the entire center of the cover so that during deployment the cover will split down the center and rotate about a line located somewhere along the flaps. By using this type of tear seam, forces on the components secured by the studs are minimized because the majority of loading is perpendicular to the studs.

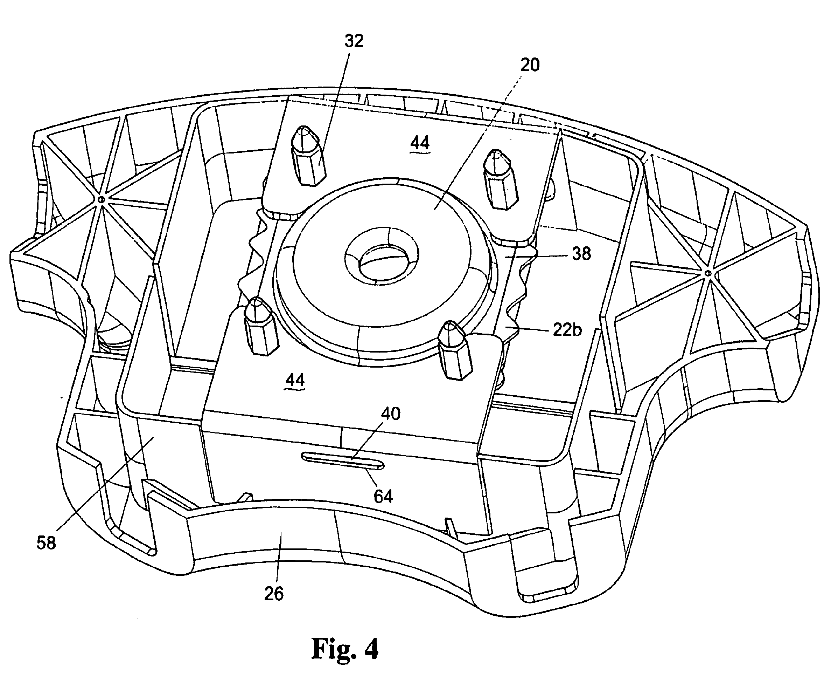

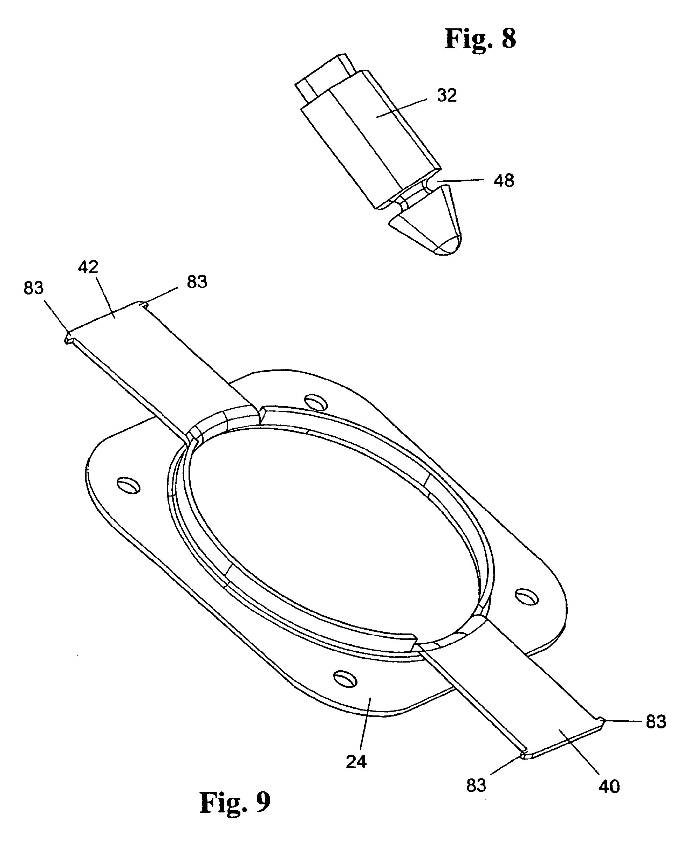

To complete the assembly of a module, the snap-end attachment nuts 32, shown in Fig. 8, are installed onto the threaded studs 28 as shown in Fig. 4. These snap-end nuts 32 serve three purposes: the nuts, in combination with the studs, draw the retaining ring 24 and inflator flange 38 together to form a tight seal; they firmly attach the cover 26 to the inflator flange 38 as shown in Fig. 4; and they serve as a mounting feature with the steering wheel and more particularly with the hub or armature 30 of the steering wheel.

With the module in the configuration shown in Fig. 4, it is ready for shipment to an auto manufacturer's assembly plant. At the assembly plant the steering wheel is first fastened to the steering shaft. Next, the airbag module is connected to the steering wheel by snapping the module into the steering wheel armature 30.

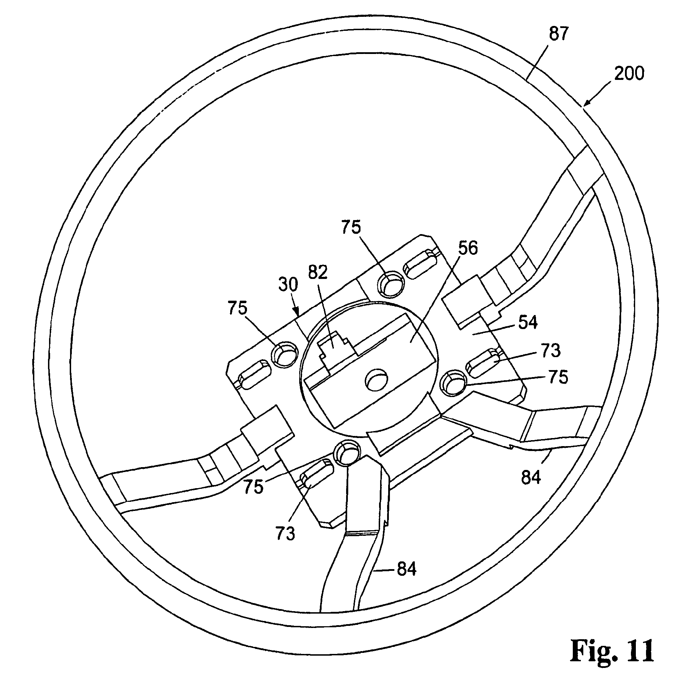

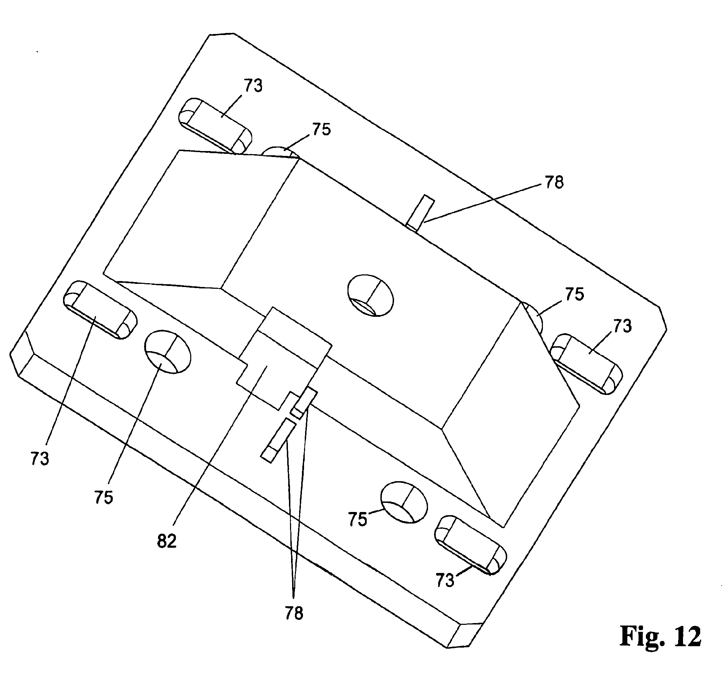

Figs. 11 and 12 show the major features of the steering wheel 200. The steering wheel includes a hub 30, a plurality of spokes 84 and a rim 87. The steering wheel armature 30 has a plurality of passages 75 therethrough for receiving the snap-end attachment nuts 32 of the airbag module. A pair of retaining wire fasteners 34 are conformed to attached to the snap-end attachment nuts 32. The snap-end attachment nuts initially spread the wire fastener 34 apart and the wire fastener then engage an grooves 48 in the snap-end attachment nuts 32. This is accomplished because as the snap-end attachment nuts from the module are pushed into the locking portions 85, 86 of each wire fastener 34, parallel legs of each fastener spread apart. Once the grooves 48 in the snap-end attachment nuts 32 are reached, the parallel legs snap into the grooves to retain the module. Should the module need to be serviced and removed from the steering wheel 200, a screwdriver or similar object is placed into the bend 80 at the end of the retaining wire fastener 34. The retaining wire fasteners can be moved until the disengaging loops 52 are aligned with the snap-end attachment nuts. With the retaining wire fasteners in this position, the module can easily be separated from the steering wheel armature 30.

The steering wheel hub 30 is provided with a flat surface 54. The steering wheel hub has a recess 56 immediately behind the module to allow installation of the inflator. The flat top surface 54 is important for the functioning of the module as it functions as a reaction surface and ensures the cushion 22 will always deploy towards the occupant. Another benefit of this flat surface is that if the surface were not flat, the cushion would be forced along an uneven surface and could snag.

The recess 56 is preferably directly behind the module for the inflator to decrease the package size of the module. This in turn can increase the distance from the module to the rim 87 of the steering wheel, potentially decreasing injuries to occupants that are close to the steering wheel.

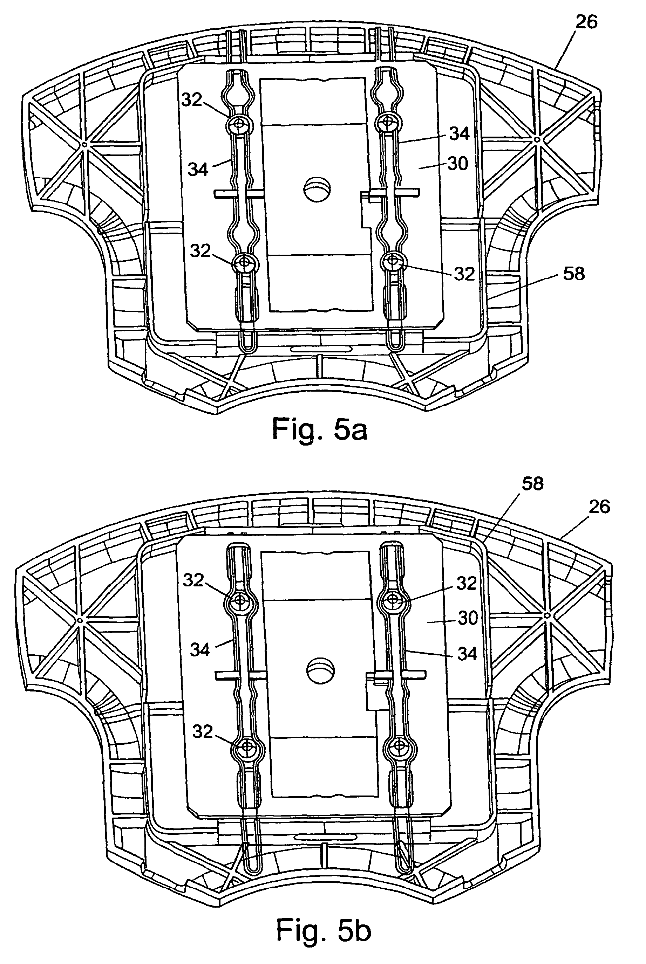

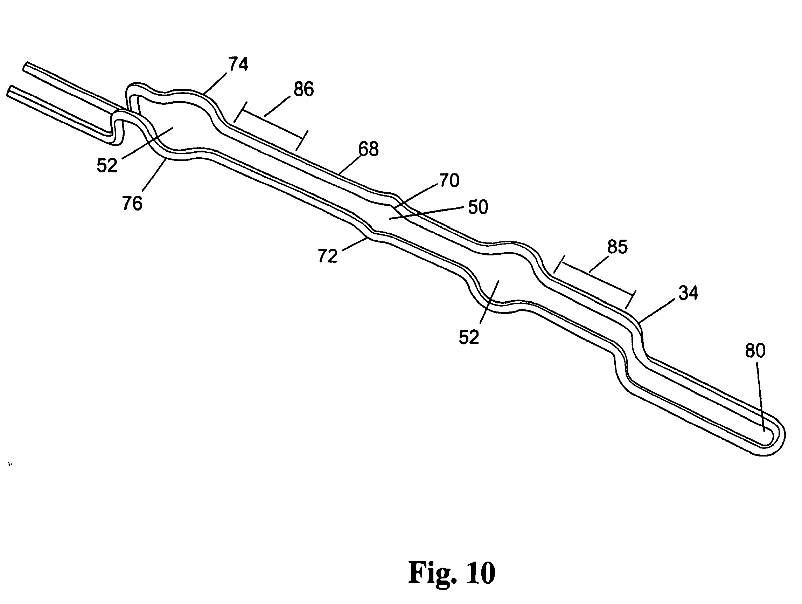

Fig. 8 shows a snap-end attachment nut 32 employed in the present invention. Snap-end attachment nuts are mounted onto the retaining ring 24 shown in Fig. 9, and each have a groove 48 for engaging a retaining wire fastener 34 as shown in Figs. 5 and 10.

Fig. 9 shows a retaining ring 24 employed in the present invention. Incorporated onto the ring are a pair of tabs 40, 42 which engage a pair of slots 64, 66 in the cover. The slots 64, 66 are preferably adjacent to the flanges 60, 62 of the cover 26 as shown in Fig. 3.

Fig. 10 shows a retaining wire fastener 34 that that is attached to the steering wheel armature 30. Each retaining wire fastener 34 is bent to form a parallel set of legs 68. The legs define two adjacent first locking portions 85, 86. Should the module experience vibration following assembly, a bend 50 interacts with a post 78 on the steering wheel hub to prevent the wire from moving out of position during vibration. The parallel legs 68 also define adjacent second radii portions 74, 76 that define first and second disengaging portions 52. When a module is to be removed from the steering wheel, an operator would grasp the retaining wire fastener and slide the leg from the engaging locking portions 85, 86 to the disengaging portions 52. When the operator attempts to move the retaining wire fastener into this position, the legs compress at the bend 50 to allow passage through the post 78. The parallel legs 68 are engaged with the steering wheel hub 30 through slots 73 in the hub.

As shown in Figs. 11 and 12, the steering wheel hub 30 has four apertures 75 therethrough for receiving snap-end attachment nuts 32. The steering wheel hub 30 further has four slots 73 for receiving a pair of retaining wire fasteners 34. The slots 73, in conjunction with the posts 78, secure the retaining wire fasteners 34 onto the armature 30 and ensure the parallel legs 68 of each retaining wire fastener are kept in position. The armature also has two pair of posts 78 located between the slots 73. Each post engages the parallel legs 68 of a retaining wire fastener 34 and prevents the parallel legs from separating at this point. The retaining wire fastener is positioned in the groove into the post 78 so that when a snap-end attachment nut 32 is pushed into the retaining wire fastener the legs spread apart instead of moving in the same direction as the retention nut. This allows the retaining wire fastener 34 to separate at the four apertures 73 but gives the wire fastener enough spring back to engage the groove 48 of the snap-end attachment nut. In addition, the posts 78 interact with the attachment wire loop 50 to prevent the wire from moving out of position during vibration. This is possible because the distance to the outside radii of the loop is slightly larger than the groove in the post 78. This prevents the wire from sliding unless a mechanic pulls the wire with sufficient force that the two parallel legs 68 compress, allowing it to pass through the groove.

As shown in Fig. 11, the steering wheel armature 30 has a recessed portion 56 that allows incorporation of a nut that secures the steering wheel assembly to the steering column shaft. The recessed portion 56 reduces the overall profile of the module/steering wheel assembly. A hole 82 through the steering wheel hub is provided to allow the inflator connector wire to be passed from the vehicle to a controller or crash sensor of the rest of the vehicle occupant protection system.

## Claims

1. A steering wheel comprising:
an armature hub (30);
an airbag module comprising an inflator (20), a cushion (22), and a retaining ring (24) for retaining the cushion and inflator to the armature hub;
at least one snap-end attachment nut (32) attached to a threaded stud (28) that extends through the inflator, cushion, and retaining ring;
at least one retaining wire fastener (34) engaging a groove in the snap-end attachment nut (32) on a side of the steering wheel hub distal from the inflator (20), cushion and retaining ring to secure the airbag module to the armature hub,
said retaining wire fastener (34) further comprising a pair of generally parallel legs (68) engaging said armature hub (30) through slots (73) provided in said armature hub (30)
**characterized in that**
said parallel legs define at least one locking portion (85) to engage said nut (32) grove, the retaining wire fastener (34) being capable of being positioned in one of a locking position or an unlocking position.

2. The steering wheel assembly of Claims 1 wherein the retaining wire fastener (34) comprises first and second disengaging portions (52).

3. The steering wheel assembly of Claim 1 and 2 wherein the armature wheel hub (30) has at least one pair of posts (78), the pair of generally parallel legs (68) being disposed between the posts (78).

## Patentansprüche

1. Lenkrad, das folgendes umfasst:
eine Armaturnabe (30),
ein Airbagmodul, das eine Aufblasvorrichtung (20), ein Kissen (22) und einen Haltering (24) zum Festhalten des Kissens und der Aufblasvorrichtung an der Armaturnabe umfasst,
wenigstens eine Schnappendbefestigungsmutter (32), befestigt an einem Gewindezapfen (28), die sich durch die Aufblasvorrichtung, das Kissen und den Haltering erstreckt,
wenigstens ein Haltedraht-Befestigungselement (34), das an einer von der Aufblasvorrichtung (20), dem Kissen und dem Haltering distalen Seite der Lenkradnabe eine Rille in der Schnappendbefestigungsmutter (32) in Eingriff nimmt, um das Airbagmodul an der Armaturnabe zu befestigen,
wobei das Haltedraht-Befestigungselement (34) ferner ein Paar von allgemein parallelen Schenkeln (68) umfasst, welche die Armaturnabe (30) durch Schlitze (73), bereitgestellt in der Armaturnabe (30), in Eingriff nehmen,
**dadurch gekennzeichnet, daß**
die parallelen Schenkel wenigstens einen Verriegelungsabschnitt (85) definieren, um die Rille der Mutter (32) in Eingriff zu nehmen, wobei das Haltedraht-Befestigungselement (34) in der Lage ist, entweder in einer Verriegelungsposition oder in einer Entriegelungsposition angeordnet zu werden.

2. Lenkradbaugruppe nach Anspruch 1, wobei das Haltedraht-Befestigungselement (34) einen ersten und einen zweiten Ausklinkabschnitt (52) umfasst.

3. Lenkradbaugruppe nach Anspruch 1 und 2, wobei die Armaturnabe (30) wenigstens ein Paar von Pfosten (78) hat, wobei das Paar von allgemein parallelen Schenkeln (68) zwischen den Pfosten (78) angeordnet wird.

## Revendications

1. Volant de direction, comprenant:
un moyeu d'armature (30);
un module de coussin d'air comprenant un dispositif de gonflement (20), un coussin (22) et une bague de retenue (24) pour retenir le coussin et le dispositif de gonflement sur le moyeu d'armature;
au moins un écrou de fixation à extrémité d'encliquetage (32) fixé sur un goujon fileté (28) s'étendant à travers le dispositif de gonflement, le coussin et la bague de retenue;
au moins un fil métallique de retenue (34) s'engageant dans une rainure dans l'écrou de fixation à extrémité d'encliquetage (32) sur un côté du moyeu du volant de direction distal par rapport au dispositif de gonflement (20), au coussin et à la bague de retenue, pour fixer le module de coussin d'air sur le moyeu d'armature;
ledit fil métallique de retenue (34) comprenant en outre une paire de branches généralement parallèles (68) s'engageant dans ledit moyeu d'armature (30) à travers des fentes (73) formées dans ledit moyeu d'armature (30);
**caractérisé en ce que**
lesdites branches parallèles définissent au moins une partie de verrouillage (85) destinée à s'engager dans ladite rainure dans l'écrou (32), le fil métallique de retenue (34) pouvant être positionné dans une position de verrouillage ou une position de déverrouillage.

2. Assemblage de volant de direction selon la revendication 1, dans lequel le fil métallique de retenue (34) comprend des première et deuxième parties de désengagement (52).

3. Assemblage de volant de direction selon les revendications 1 et 2, dans lequel le moyeu d'armature (30) comporte au moins une paire de montants (78), la paire de branches généralement parallèles (68) étant agencée entre les montants (78).
